# EUROPEAN PATENT SPECIFICATION

(11) **EP 1 037 524 B1**
(45) Date of publication and mention of the grant of the patent: **12.05.2004**
(21) Application number: 99949453.7
(22) Date of filing: 01.10.1999
(51) Int. Cl.: A01K 9/00

(54) **A METHOD OF AND AN IMPLEMENT FOR AUTOMATICALLY FEEDING ANIMALS**
VERFAHREN UND ANORDNUNG ZUR AUTOMATISCHEN FÜTTERUNG VON TIEREN
PROCEDE ET DISPOSITIF POUR L'ALIMENTATION AUTOMATIQUE D'ANIMAUX

(30) Priority: 13.10.1998 NL 1010305
(43) Date of publication of application: 27.09.2000
(60) Divisional application: 04075184.4
(73) Proprietor: MAASLAND N.V., 3147 PA Maassluis (NL)
(72) Inventor: VAN DER LELY, Olaf, CH-6300 Zug (CH); VAN DER LELY, Alexander, NL-3065 NA Rotterdam (NL); VAN DEN BERG, Karel, NL-2971 BR Bleskensgraaf (NL)
(74) Representative: Corten, Maurice Jean F.M.
(86) International application number: PCT/NL1999/000612
(87) International publication number: WO 2000/021359

(56) References cited:
- EP-A- 0 391 602
- EP-A- 1 041 873
- FR-A- 2 689 727

## Description

The invention relates to a method of automatically feeding animals, such as calves or cows, according to the preamble of claim 1.

Such a method is known from FR-A-2,689,727.

The invention aims at providing an alternative method obviating the disadvantage that the milk or mother's milk is yielded manually from the mother cow or dairy animal and is subsequently supplied to the feeding machine for young animals. This is very labour-intensive, especially because the young animals often have to be provided with milk or mother's milk many times a day. It may also be advantageous to compose a special feed for certain animals, such as bulls that are used for artificial insemination (AI-bulls). Also in that case feeding is very labour-intensive.

A method as defined above comprises the features as specified in the characterizing part of claim 1. In this way it is no longer necessary to yield the milk or mother's milk manually and the milk is supplied automatically to the individual animal, such as a calf or an AI-bull. In this manner it is also possible for the individual animal to receive milk or mother's milk from its mother.

According to another inventive feature, an individual animal is identified and the individual animal is provided with feed, provided that a preset time has elapsed since the last feeding of this individual animal.

In accordance with an inventive feature, the composition of the feed is automatically attuned to the current nutritive requirements of the individual animal. The composition of the feed is automatically attuned to the current nutritive requirements of the individual animal by adding one or more auxiliary substances. The auxiliary substances that can be automatically added to the composition of the feed comprise inter alia water, vitamins, medicaments, nutritive supplements, immunological stimulants, or growth stimulants, such as hormones.

According to a further inventive feature, an automatic determination of the composition of the milk or mother's milk is effected and, on the basis of said determination, the milk or mother's milk yielded by the milking machine is automatically discharged or stored in a first or further storage means.

In accordance with another aspect of the invention, the milk or mother's milk yielded by the milking machine is cooled down and stored in a liquid or solid phase in a first or further storage means. When storing the milk or mother's milk, the characteristics and the composition of the milk or mother's milk are maintained as optimally as possible, while the milk or mother's milk is preserved at the same time.

In accordance with an inventive feature, the current nutritive requirements of the individual animal are determined with the aid of automatic means and the composition of the feed is attuned to the current nutritive requirements of the individual animal. In this way it is possible to provide the individual animal with special feed, for example when the animal is ill. According to a further inventive feature, the automatic means are adapted to determine the current nutritive requirements of the individual animal in an optical and/or acoustic manner, and/or on the basis of the animal's weight, and/or one or more dimensions of the individual animal. The data relating to the determination of the current nutritive requirements, nutritive need, the composition of the milk or mother's milk and the composition of the feed are stored in a memory. Suitable milk or mother's milk stored in the first or further storage means is selected on the basis of the data stored in a memory. Thus it is achieved that the individual animal is provided with milk or mother's milk which has been stored or supplied directly and whose composition corresponds to the current nutritive requirements of the individual animal.

The invention will now be explained in further detail with reference to the drawing of an embodiment of an implement.

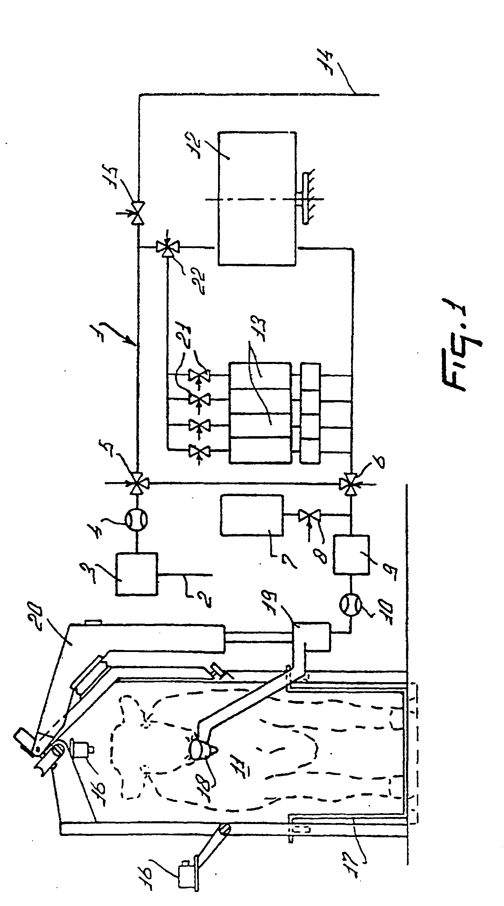

Figure 1 is a view of an implement for carrying out the method according to the invention.

The implement is provided with a transport system 1 consisting, in an embodiment, of a line system for the transport of milk or mother's milk, auxiliary substances and feed. The transport system is provided with automatic valves 8, 15, 21 and automatic three-way valves 5, 6, 22. From the inlet 2 the milk or mother's milk enters the implement from the milking machine which may consist of one or more milking robots. The milk or mother's milk is analysed by the automatic analysis device 3 measuring the composition of the milk or mother's milk. The results of the measurement of the composition together with the identification code of the mother cow are stored in a memory. The first volume flow meter 4 measures the amount of milk or mother's milk. This result is also stored in a memory together with the data from the automatic analysis device. Subsequently the milk or mother's milk can be supplied, via the three-way valve 5, automatically and directly to the individual animal 11, be stored in a first storage means 12 or a further storage means 13, or be discharged from the implement via a valve 15 and a discharge channel 14, for example to the sewer.

The storage of milk or mother's milk takes place in a first storage means 12 or a further storage means 13. In the first storage means 12 the milk or mother's milk is stored automatically, preferably in a liquid, cooled phase. The first storage means 12 is provided with separate reservoirs, so that the milk from different mother animals or dairy animals can be kept in the same storage means 12. In a memory are stored the composition of the milk or mother's milk, an identification code of the mother animal from which the milk or mother's milk has been yielded and the position of the milk or mother's milk in the first storage means 12. In an embodiment the first storage means 12 is designed as a sample rack or a carousel, so that in a relatively small space many milk samples can be kept separately and the samples can easily be stored in the first storage means 12 and be recollected therefrom. In the further storage means 13 the milk or mother's milk is stored automatically, preferably in a solid, cooled phase. The milk or mother's milk can be frozen, but as a result thereof the composition of the milk or mother's milk may change. Therefore, in an embodiment the further storage means 13 consists of a freezing-dry chamber in which the milk or mother's milk is stored automatically, its composition remaining unchanged. Also in this case the further storage means 13 is provided with separate reservoirs, so that the milk from different mother animals can be kept in the same storage means 13. In a memory are stored the composition of the milk or mother's milk, an identification code of the mother animal from which the milk or mother's milk has been yielded and the position of the milk or mother's milk in the further storage means 13. In an embodiment the further storage means 13 is also designed as a sample rack or a carousel, so that in a relatively small space many milk samples can be kept separately and the samples can easily be stored in the further storage means 13 and be recollected therefrom.

Via the automatic three-way valve 6 the milk or mother's milk coming directly from the milking machine or first having been stored in a first storage means 12 or a further storage means 13, is then supplied to the individual animal 11, while a warming up element 9 first warms up the feed or the milk or mother's milk, so as to make the feed or the milk or mother's milk suitable for consumption by the young animal. The amount of feed supplied to the young animal is measured by means of a second volume flow meter 10.

When an animal enters the feeding station, it is identified automatically. The composition of the feed is adapted to the current nutritive need of the individual young animal. With the aid of the automatic mixing device 7 and the valve 8, auxiliary substances can be added to the milk or mother's milk, so that the feed is composed for the individual animal. The current nutritive need is determined by means of sensors, an algorithm and data relating to the condition, growth and weight of the individual animal, which data are stored in a memory. These sensors comprise in this embodiment: optical sensors 16 for measuring the condition and growth of the animal, a weighing device 17 and a temperature sensor in the metering device 18.

Then the individual animal is fed by means of a metering device which, in this embodiment, is connected to a movable arm 19. Said movable arm may be connected to a pivotable arm 20.

## Claims

1. A method of automatically feeding animals, such as calves or cows, in which
- milk or mother's milk, such as beestings, beestingslike milk, foremilk, or colostrum, is a component part of the feed,
- the amount of feed is attuned to the nutritive need of the individual animal,
- the feed is supplied to the individual animal,
**characterized in that**
- the milk or mother's milk is yielded by a milking machine,
- the milk or mother's milk is supplied automatically and directly from the milking machine to the individual animal, or the milk or mother's milk is supplied automatically after having been stored in a first or further storage means and **in that**
- one or more characteristics, such as an identification number, of the dairy animal, such as a cow from which the milk or mother's milk has been yielded, are stored in a memory,
- the milk or mother's milk from the dairy animal is supplied to the corresponding individual animal, such as a calf or a cow.

2. A method as claimed in claim 1, **characterized in that**
- an individual animal is identified,
- the individual animal is provided with feed, provided that a preset time has elapsed since the last feeding of this individual animal.

3. A method as claimed in claim 1 or 2, **characterized in that**
- the composition of the feed is automatically attuned to the current nutritive requirements of the individual animal.

4. A method as claimed in any one of claims 1 - 3, **characterized in that**
- the composition of the feed is automatically attuned to the current nutritive requirements of the individual animal by adding one or more auxiliary substances.

5. A method as claimed in any one of claims 1 - 4, **characterized in that**
- to the composition of the feed there are added automatically at least one or more auxiliary substances, such as water, vitamins, medicaments, nutritive supplements, immunological stimulants, or growth stimulants, such as hormones.

6. A method as claimed in any one of the preceding claims, **characterized in that**
- an automatic determination of the composition of the milk or mother's milk is effected,
- on the basis of said determination, the milk or mother's milk yielded by the milking machine is automatically discharged or stored in a first or further storage means.

7. A method as claimed in any one of the preceding claims, **characterized in that**
- the milk or mother's milk yielded by the milking machine is cooled down and stored in a liquid or solid phase in a first or further storage means.

8. A method as claimed in any one of the preceding claims, **characterized in that**
- the current nutritive requirements of the individual animal are determined with the aid of automatic means,
- the composition of the feed is attuned to the current nutritive requirements of the individual animal.

9. A method as claimed in any one of the preceding claims, **characterized in that**
- the automatic means are adapted to determine the current nutritive requirements of the individual animal in an optical and/or acoustic manner, and/or on the basis of the weight and/or one of more dimensions of the individual animal.

10. A method as claimed in any one of the preceding claims, **characterized in that**
- the data relating to the determination of the current nutritive requirements, nutritive need, the composition of the milk or mother's milk and the composition of the feed are stored in a memory, and
- one or more characteristics, such as an identification number, of the individual animal are stored in a memory.

11. A method as claimed in any one of the preceding claims, **characterized in that**
- suitable milk or mother's milk stored in the first or further storage means is selected on the basis of the data stored in a memory.

## Patentansprüche

1. Verfahren zum automatischen Füttern von Tieren, wie z. B. Kälbern oder Kühen, bei dem
- Milch oder Muttermilch, wie z.B. Biestmilch oder biestmilchähnliche Milch, Vormilch oder Kolostralmilch, Bestandteil des Futters ist,
- die Futtermenge auf den Futterbedarf des einzelnen Tieres abgestimmt ist,
- das Futter dem einzelnen Tier zugeführt wird,
**dadurch gekennzeichnet, daß**
- die Milch oder Muttermilch durch eine Melkmaschine gewonnen wird,
- die Milch oder Muttermilch automatisch und direkt von der Melkmaschine dem einzelnen Tier zugeführt wird, oder die Milch oder Muttermilch automatisch zugeführt wird, nachdem sie in einer ersten oder einer weiteren Aufnahmevorrichtung gelagert worden ist, und daß
- ein oder mehrere Charakteristika, wie z. B. eine Identifikationsnummer, des milchgebenden Tieres, wie z. B. einer Kuh, von dem die Milch oder Muttermilch gewonnen wurde, in einem Speicher gespeichert wird,
- die Milch oder Muttermilch des milchgebenden Tieres dem entsprechenden einzelnen Tier, wie z. B. einem Kalb oder einer Kuh, zugeführt wird.

2. Verfahren nach Anspruch 1,
**dadurch gekennzeichnet, daß**
- ein einzelnes Tier identifiziert wird,
- das einzelne Tier mit Futter versorgt wird unter der Voraussetzung, daß eine vorgegebene Zeit seit dem letzten Füttern dieses einzelnen Tieres verstrichen ist.

3. Verfahren nach Anspruch 1 oder 2,
**dadurch gekennzeichnet, daß**
- die Zusammensetzung des Futters automatisch auf die aktuellen Ernährungsbedürfnisse des einzelnen Tieres abgestimmt wird.

4. Verfahren nach einem der Ansprüche 1 bis 3,
**dadurch gekennzeichnet, daß**
- die Zusammensetzung des Futters automatisch auf die aktuellen Ernährungsbedürfnisse des einzelnen Tieres abgestimmt wird, indem ein oder mehrere Zusatzstoffe zugesetzt werden.

5. Verfahren nach einem der Ansprüche 1 bis 4,
**dadurch gekennzeichnet, daß**
- der Zusammensetzung des Futters automatisch mindestens ein oder mehrere Zusatzstoffe, wie z. B. Wasser, Vitamine, Medikamente, Nahrungsergänzungsstoffe, immunologische Stimulanzien oder Wachstumsstimulanzien, wie z. B. Hormone, zugesetzt werden.

6. Verfahren nach einem der vorhergehenden Ansprüche,
**dadurch gekennzeichnet, daß**
- eine automatische Untersuchung der Zusammensetzung der Milch oder Muttermilch durchgeführt wird,
- auf der Basis dieser Untersuchung die von der Melkmaschine gewonnene Milch oder Muttermilch automatisch abgeleitet oder in einer ersten oder weiteren Aufnahmevorrichtung gelagert wird.

7. Verfahren nach einem der vorhergehenden Ansprüche,
**dadurch gekennzeichnet, daß**
- die von der Melkmaschine gewonnene Milch oder Muttermilch gekühlt und in flüssigem oder festem Zustand in einer ersten oder weiteren Aufnahmevorrichtung gelagert wird.

8. Verfahren nach einem der vorhergehenden Ansprüche,
**dadurch gekennzeichnet, daß**
- die aktuellen Ernährungsbedürfnisse des einzelnen Tieres mittels automatischer Vorrichtungen ermittelt wird,
- die Zusammensetzung des Futters auf die aktuellen Ernährungsbedürfnisse des einzelnen Tieres abgestimmt wird.

9. Verfahren nach einem der vorhergehenden Ansprüche,
**dadurch gekennzeichnet, daß**
- die automatischen Vorrichtungen geeignet sind, die aktuellen Ernährungsbedürfnisse des einzelnen Tieres auf optische und/oder akustische Weise und/oder auf der Basis des Gewichts und/oder einer oder mehrerer Abmessungen des einzelnen Tieres zu ermitteln.

10. Verfahren nach einem der vorhergehenden Ansprüche,
**dadurch gekennzeichnet, daß**
- die Daten bezüglich der Ermittlung der aktuellen Ernährungsbedürfnisse, des Futterbedarfs, der Zusammensetzung der Milch oder Muttermilch und der Zusammensetzung des Futters in einem Speicher gespeichert werden, und daß
- ein oder mehrere Charakteristika, wie z. B. eine Identifikationsnummer, des einzelnen Tieres in einem Speicher gespeichert werden.

11. Verfahren nach einem der vorhergehenden Ansprüche,
**dadurch gekennzeichnet, daß**
- eine geeignete Milch oder Muttermilch, die in der ersten oder der weiteren Aufnahmevorrichtung gelagert ist, auf der Basis der in einem Speicher gespeicherten Daten ausgewählt wird.

## Revendications

1. Procédé d'alimentation automatique d'animaux, notamment des veaux ou des vaches, dans lequel
- du lait ou du lait maternel, notamment du colostrum, du lait semblable au colostrum ou du premier lait, est un composant de la nourriture,
- la quantité de nourriture est adaptée aux besoins nutritifs de l'animal individuel,
- la nourriture est fournie à l'animal individuel,
**caractérisé en ce que**
- le lait ou le lait maternel est prélevé par une machine à traire,
- le lait ou le lait maternel est fourni automatiquement et directement de la machine à traire à l'animal individuel, ou le lait ou le lait maternel est fourni automatiquement après avoir été stocké dans des premiers moyens de stockage ou d'autres moyens de stockage et **en ce que**
- une ou plusieurs caractéristiques, notamment un numéro d'identification, de l'animal laitier, notamment une vache de laquelle le lait ou le lait maternel a été prélevé, sont stockées dans une mémoire,
- le lait ou le lait maternel de l'animal laitier est fourni à l'animal individuel correspondant, notamment un veau ou une vache.

2. Procédé selon la revendication 1, **caractérisé en ce que**
- un animal individuel est identifié
- l'animal individuel reçoit de la nourriture, à condition qu'un délai prédéfini se soit écoulé depuis la dernière alimentation de cet animal individuel.

3. Procédé selon la revendication 1 ou 2, **caractérisé en ce que**
- la composition de la nourriture est automatiquement adaptée aux exigences nutritives actuelles de l'animal individuel.

4. Procédé selon l'une quelconque des revendications 1 à 3, **caractérisé en ce que**
- la composition de la nourriture est automatiquement adaptée aux exigences nutritives actuelles de l'animal individuel en ajoutant une ou plusieurs substances auxiliaires.

5. Procédé selon l'une quelconque des revendications 1 à 4, **caractérisé en ce que**
- à la composition de la nourriture sont ajoutées automatiquement au moins une ou plusieurs substances auxiliaires, notamment de l'eau, des vitamines, des médicaments, des compléments nutritifs, des stimulants immunitaires, ou des stimulants de croissance, notamment des hormones.

6. Procédé selon l'une quelconque des revendications précédentes, **caractérisé en ce que**
- une détermination automatique de la composition du lait ou du lait maternel est effectuée,
- sur la base de ladite détermination, le lait ou le lait maternel prélevé par la machine à traire est automatiquement évacué ou stocké dans des premiers moyens de stockage ou d'autres moyens de stockage.

7. Procédé selon l'une quelconque des revendications précédentes, **caractérisé en ce que**
- le lait ou le lait maternel obtenu par la machine à traire est refroidi et stocké dans une phase liquide ou solide dans des premiers moyens de stockage ou d'autres moyens de stockage.

8. Procédé selon l'une quelconque des revendications précédentes, **caractérisé en ce que**
- les exigences nutritives actuelles de l'animal individuel sont déterminées à l'aide de moyens automatiques,
- la composition de la nourriture est adaptée aux exigences nutritives actuelles de l'animal individuel.

9. Procédé selon l'une quelconque des revendications précédentes, **caractérisé en ce que**
- les moyens automatiques sont adaptés pour déterminer les exigences nutritives actuelles de l'animal individuel de manière optique et/ou acoustique, et/ou sur la base du poids et/ou d'une ou plusieurs dimensions de l'animal individuel.

10. Procédé selon l'une quelconque des revendications précédentes, **caractérisé en ce que**
- les données relatives à la détermination des exigences nutritives actuelles, des besoins nutritifs, de la composition du lait ou du lait maternel et de la composition de la nourriture sont stockées dans une mémoire, et
- une ou plusieurs caractéristiques, notamment un numéro d'identification, de l'animal individuel sont stockées dans une mémoire.

11. Procédé selon l'une quelconque des revendications précédentes, **caractérisé en ce que**
- du lait ou du lait maternel approprié stocké dans des premiers moyens de stockage ou d'autres moyens de stockage est sélectionné sur base des données stockées dans une mémoire.
